# EUROPEAN PATENT APPLICATION

(11) **EP 1 189 065 A1**
(43) Date of publication of application: **20.03.2002**
(21) Application number: 01121288.3
(22) Date of filing: 05.09.2001
(51) Int. Cl.: G01P 3/489

(54) **Wheel speed sensor**

(30) Priority: 11.09.2000 JP 2000275307
(71) Applicant: Denso Corporation, Kariya-city, Aichi-pref., 448-8661 (JP)
(72) Inventor: Inoue, Yuichi, Kariya-city, Aichi-pref., 448-8661 (JP); Taguchi, Takeyasu, Kariya-city, Aichi-pref., 448-8661 (JP)
(74) Representative: Winter, Brandl, Fürniss, Hübner, Röss, Kaiser, Polte Partnerschaft

(57) **Abstract**

An integrated value (Δtsum) of pulse time intervals (Δt) during one rotation of a signal rotor is computed (S110), and the integrated value (Δtsum) is updated by replacing the pulse time interval achieved one rotation ago with a newly obtained pulse interval (Δt(m)) after exceeding one rotation (S210-S260), while determining an average pulse interval (Δtave) which is an average value of the integrated value (Δtsum) (S420). That is, the pulse information is extracted on the basis of time information required for one rotation of the tire. After the one rotation of the tire, pulse information having the same uniformity as one rotation ago is regained.
A running average of n tooth segment times is formed and non-uniformities of individual teeth are filtered out.
Additionally, tire pressure may be detected using a Fourie transform.

## Description

The present invention relates to a wheel rotation information detecting apparatus which detects information on vehicle wheel rotation on the basis of an electrical signal varying with vehicle wheel rotation, e.g., pulse information showing time information and speed information given by dividing information on one wheel rotation into plural pieces of information.

Conventionally, the rotational speed of tire is computed on the basis of the edge information of rotor teeth. However, in case the rotor or tire uniformity (degree of variation) has a substantial effect, the rotational speed can not correctly be computed, resulting in a poor estimation accuracy in estimating a subsequent condition and low vehicle control performance.

In JP-A -6-308139, therefore, steady pulse information is obtained by correcting the uniformity by each rotor tooth.

According to the method disclosed in the Japanese Patent stated above, however, the correction factor is computed by each rotortooth. A great computing load, therefore, is required for computing the correction factor for all teeth of the rotor, and also it is necessary to store in the memory information of a result of computation and information used in computation, e.g., a pulse interval formed correspondingly to the edge of each tooth, which, however, will present such a problem as large consumption of microcomputing resources.

To accurately compute only the uniformity with vehicle acceleration and components of road surface roughness excluded, a certain degree of information is needed. Therefore, in the case of insufficient information like during some period after vehicle start, the uniformity can not be properly corrected, failing in obtaining accurate information on rotation.

In view of the above-described problem, it is an object of the present invention to provide a wheel rotation information detecting apparatus which is capable of reducing consumption of the microcomputer resources and reliably obtaining information on rotation also in the case not so much time has passed after the vehicle is started.

To accomplish the above-described object, the wheel rotation information detecting apparatus for detecting information on the wheel rotation on the basis of the toothed rotor which turns together with the vehicle wheel has a detecting means which detects edge information corresponding to the rotor teeth, a storage means which stores edge information per cycle which is equal to a predetermined number of edge information in one period, and a means which rewrites information in preceding one cycle of the edge information that have been stored in the storage means to a most up-to-date edge information and stores the rewritten edge information to the storage means when the most up-to-date one of the edge information has been detected.

The edge information obtained one cycle ago that has been stored in the storage means is rewritten to the most up-to-date edge information, that is, the edge information obtained one cycle ago is rewritten to the edge information obtained this time. By thus rewriting the edge information, it becomes possible to easily gain edge information of which the uniformity has been cancelled.

In this case, therefore, it will suffice if the edge information per rotation of the rotor is stored as one cycle of edge information. That is, after one rotation of the tire, an edge information having the same uniformity as that one rotation ago is obtained again. Therefore, it is possible to easily obtain the edge information the uniformity of which has been cancelled, by changing the edge information obtained one rotation ago to the edge information obtained this time.

As the edge information, there will be given an example of the pulse interval(Δt) corresponding to an interval between rising edges or falling edges of pulses occurring correspondingly to the rotor teeth.

The wheel speed and the wheel acceleration can be computed on the basis of the edge information thus obtained. Also the information on vehicle vibration, e.g., the road surface friction coefficient, and the tire air pressure can be detected. Furthermore, an abnormal tire air pressure can be warned according to a result of detection of the tire air pressure.

Other features and advantages of the present invention will be appreciated, as well as methods of operation and the function of the related parts, from a study of the following detailed description, the appended claims, and the drawings, all of which form a part of this application. In the drawings:
Fig. 1 is a schematic block diagram of a wheel rotation information detecting apparatus in the first embodiment of the present invention;
Fig. 2 is a flowchart showing vehicle speed pulse interrupt routine;
Fig. 3 is a flowchart showing details of Δt integration routine in Fig. 2;
Fig. 4 is a flowchart showing a regular time interrupt routine;
Fig. 5 is a flowchart showing details of the wheel speed computing routine in Fig. 4;
Fig. 6 is a flowchart showing details of the wheel speed computing routine in Fig. 4;
Fig. 7 is a flowchart showing details of wheel vibration information detecting routine in Fig. 4; and
Fig. 8 is a flowchart showing details of the tire air pressure warning routine in Fig. 4.

### (First Embodiment)

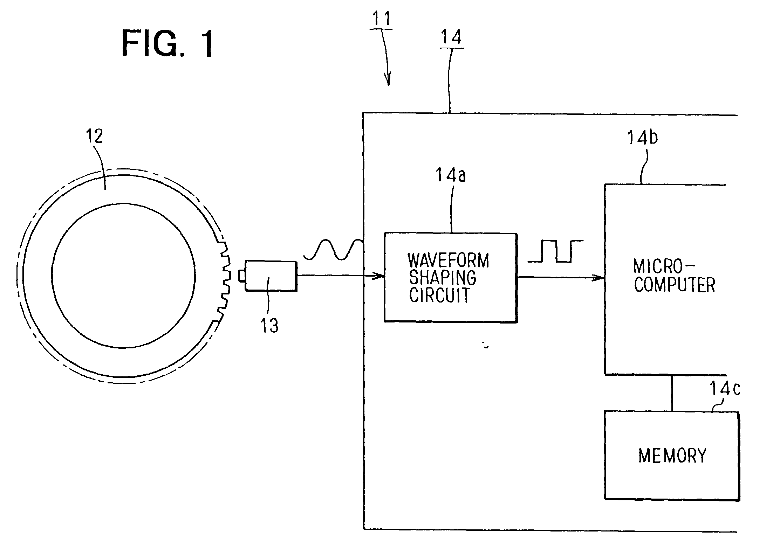

Fig. 1 shows a general configuration of the wheel rotation information detecting apparatus according to a first embodiment of the present invention. The configuration of the wheel rotation information detecting apparatus will be explained with reference to the drawing.

A wheel rotation information detecting apparatus 11 detects information on vehicle wheel rotation on the basis of s signal rotor 12 which rotates together with the vehicle wheel. The signal rotor 12 made of a magnetic material is a gear-shaped member having a number of teeth (48 teeth in the first embodiment) equally spaced on the outer periphery thereof. An electromagnetic pickup 13 constituting a vehicle wheel speed sensor is fixedly mounted in the vicinity of the outer periphery of the signal rotor 12.

The electromagnetic pickup 13 detects a signal inclusive of edge information of teeth of the signal rotor 12 on the basis of the magnetic field changing with the passage of the teeth of the signal rotor 12 rotating together with the vehicle wheel, outputting one sinusoidal pickup signal every time for instance one tooth passes by. The sinusoidal pickup signal is inputted into an electronic control unit (hereinafter called the ECU) 14.

The ECU 14 is comprised of a waveform shaping circuit 14a into which the sinusoidal pickup signal is inputted, a microcomputer 14b which is supplied with a signal wave processed by the waveform shaping circuit 14a and has a means which carries out various operations on the basis of the signal wave thus supplied, and a memory 14c as the storage means . It is designed to process the sinusoidal pickup signal to a square-wave signal by means of the waveform shaping circuit 14a, and to input for instance a rise or fall of the square-wave signal as an interrupt signal into the microcomputer 14b.

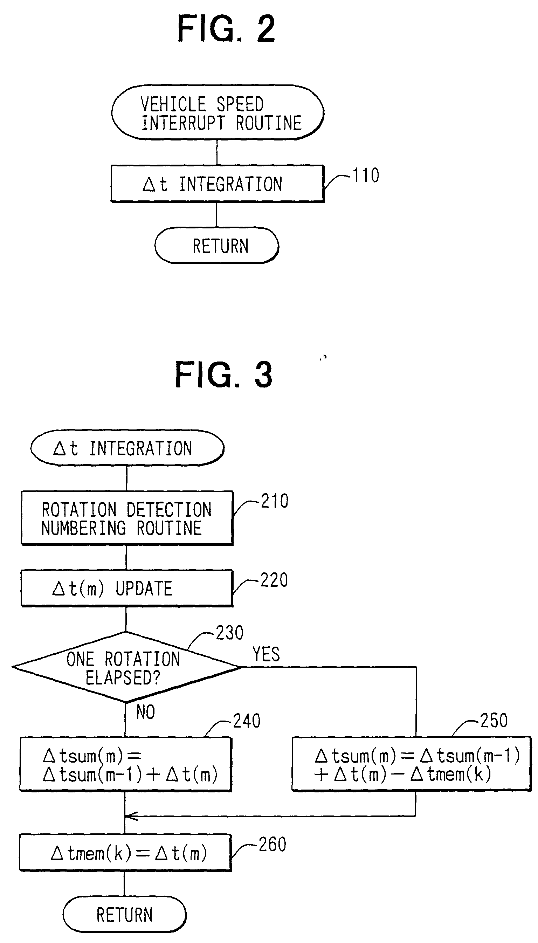

A flowchart for a vehicle speed pulse interrupt routine to be executed on the basis of this interrupt signal will be given in Fig. 2. The vehicle speed pulse interrupt routine is carried out correspondingly to the fall of the square-wave signal, performing the integration (Step 110) of the pulse intervals Δt as edge information each of which is equivalent to the interval between a trailing edge and the subsequent trailing edge. Integration of the pulse intervals Δt is achieved by each rotation of the rotor, thereby computing the time equivalent to one rotation of the rotor.

Fig. 3 gives a flowchart showing details of integration of the pulse intervals Δt. The routine for integrating the pulse intervals Δt will be explained by referring to the drawing. The integration of the pulse intervals Δt is executed by an integrated value computing means of the microcomputer 14b.

First, at Step 210 is shown a rotation detection numbering routine, in which rotor teeth are numbered by each pulse. That is, the teeth of the signal rotor 12 are designated by 1 up to the greatest value (48 in the present embodiment) equivalent to the total number of teeth; and the tooth numbers thus given to the teeth of the signal rotor 12 are assigned to each of the pulses in order. After the completion of numbering from 1 to the greatest value, the routine goes back to the start to repeat the same routine. At this time, the rotation detection numbering routine is designated by "k" which will be stated later. The relation between the teeth of the signal rotor 12 and the pulses, that is, to which tooth of the signal rotor 12 the pulse corresponds will be determined by this rotation detection numbering routine. This rotation detection numbering routine is executed by the rotation detection numbering means of the microcomputer 14b.

Subsequently at Step 220, the pulse interval Δt(m) is read in. The letter "m" stated here is meant by an m-th pulse interval detected during one rotation of the signal rotor 12. Suppose the pulse interval between the first-tooth pulse and the second-tooth pulse is Δt(1), the Δt(m) signifies a pulse interval between the m-th tooth pulse and the m + first-tooth pulse. The "m" represents the total number of teeth in one rotation, adding up the number of teeth from the start of rotation to the end of rotation.

Subsequently at Step 230 is decided whether or not the signal rotor 12 has completed one rotation. This decision is made by checking to see if the same number of pulse signals as the teeth of the signal rotor 12 have been uninterruptedly inputted. If the result of decision is "NO", the routine proceeds to Step 240. When the result of decision is "YES" at Step 240, the routine will go on to Step 250. In the case the "YES" decision is once made in this routine, a flag is set up, and thereafter the decision at this step can easily be done by checking the flag. In this case also, however, it is necessary to clear the flag on condition that the vehicle has almost stopped. When the vehicle has almost come to a stop, the vehicle wheel rotation can be detected from the vehicle wheel speed to be determined by the later-described routine.

At Step 240, the integrated value Δtsum of the pulse intervals Δt is computed. To be more specific, Δt(m) detected this time is added to the integrated value Δtsum (m - 1). By this processing, the addition of Δt(m) is continued until the signal rotor 12 completes one rotation, finally achieving the integrated value Δ tsum of one rotation of the signal rotor 12. The routine, when completed, proceeds to Step 260.

On the other hand, at Step 250, the integrated value Δtsum is updated. To be more specific, Δt(m) detected this time is added to the integrated value Δtsum (m - 1) achieved so far, and at the same time the pulse interval Δtmem (k) detected one rotation ago, that is, the m-th pulse interval detected last time is deducted, whereby the integrated value Δtsum (m) of the pulse interval Δt for the latest one rotation is computed. The pulse interval Δtmem (k) detected one rotation ago is decided by reading in the pulse interval Δtmem (k) which corresponds to the rotation detection number assigned at Step 210 from the stored contents at Step 260 described later.

Subsequently at Step 260, the m-th pulse interval Δt (m) detected this time is stored as Δ tmem (k) in the memory 14c of the ECU 14, correspondingly to the rotation detection number assigned at Step 210. That is, the pulse interval Δ tmem (k) is stored by each rotation detection number. And when the pulse interval Δt of the same rotation detection number as the pulse interval Δt (m) detected this time has been precedently stored in the memory 14c, the pulse interval Δt (m) detected this time is updated as a new pulse interval Δtmem (k) of the rotation detecting number. The letter "k" stated here is meant by the rotation detection number, that is, the tooth number.

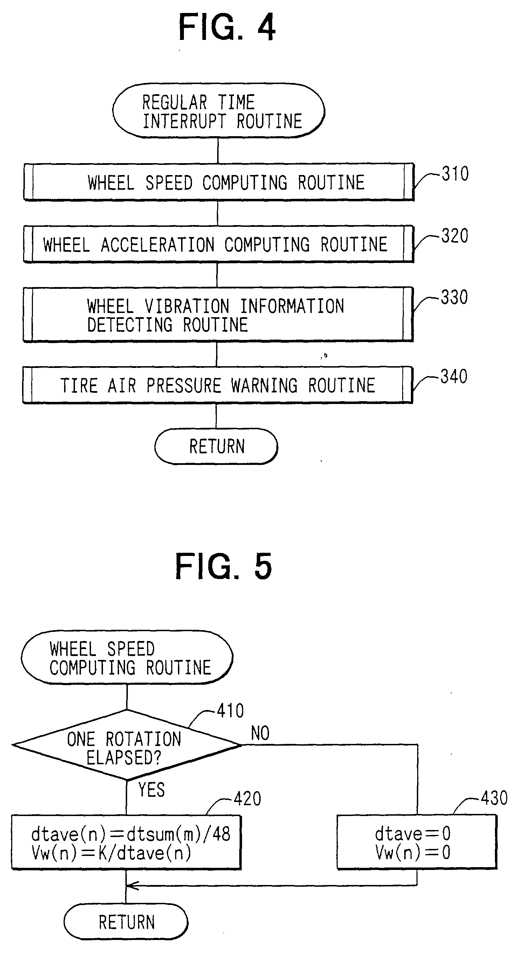

On the other hand, in the ECU 14, the regular time interrupt routine is also executed. A flowchart of this regular time interrupt routine is given in Fig. 4. The regular time interrupt routine is carried out every regular time interrupt signal of the microcomputer 14b which occurs every predetermined time.

First at Step 310, the wheel speed computing routine is carried out; at Step 320 the wheel acceleration computing routine is performed; at Step 330, the wheel vibration information detecting routine is executed; and at Step 340, the air pressure warning routine is performed. Flowcharts showing details of these routines at Steps 320 to 340 are given in Figs. 5 to 8. Each of these routines will be explained in detail with reference to the accompanying drawings.

First, details of the wheel speed computing routine will be explained by referring to Fig. 5. The wheel speed computing routine is carried out by the wheel speed computing means of the microcomputer 14b.

At Step 410, whether or not the signal rotor 12 has completed one rotation is decided. This decision is conducted through the same routine as that at Step 230 or by confirming the flag set at Step 230. When the result of decision is "YES", the routine proceeds to Step 420, and on the other hand if the result is "NO", the routine proceeds to Step 430.

At Step 420, the average pulse interval Δtave and the wheel speed Vw (n) are computed. To be specific, the average pulse interval Δtave is given by dividing the integrated value Δtsum of the pulse interval Δt obtained at Step 250 by the number of teeth (48 in the present embodiment). And the wheel speed Vw (n) is given by dividing the wheel speed conversion coefficient K by the average pulse interval Δtave. Then, the routine will end upon completion of the computation of the wheel speed Vw (n). The letter "n" denotes a sampling timing. Furthermore, the wheel speed conversion coefficient K is a coefficient used to obtain the wheel speed from the pulse interval. The conversion of the pulse interval to a speed per hour is expressed by K = 3600 sec x 2πR/Number of teeth (48 in the present embodiment), in which "R" is the dynamic load radius of tire < m >.

In the meantime, at Step 430, because the signal rotor 12 has not completed one rotation yet, the average pulse interval Δtave and the wheel speed Vw (n) are both reset to zero, thus ending the routine.

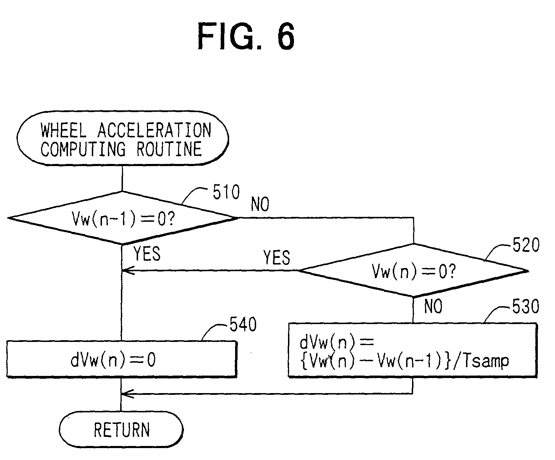

Next the details of the wheel acceleration computing routine will be explained by referring to Fig. 6. The wheel acceleration computing routine is carried out by the use of the wheel acceleration computing means of the microcomputer 14b. The wheel acceleration ΔVw(n) is equivalent to the ratio of variation of the wheel speed Vw (n) (a differential value). Therefore, the computation of the wheel acceleration ΔVw(n) is carried out on the basis of the wheel speed Vw (n - 1) previously computed in the wheel speed computing routine and the wheel speed VW (n) computed this time.

First, at Step 510 and Step 520, a decision is made on whether or not the wheel speed VW (n - 1) previously computed and the wheel speed VW (n) computed this time are zero. When both of these wheel speeds are not zero, the routine proceeds to Step 530; and if either one is zero, the routine proceeds to Step 540.

At Step 530 is computed the wheel acceleration ΔVw(n), which is given by dividing a difference between the wheel speed Vw (n) computed this time and the wheel speed VW (n - 1) previously computed, by the sample interval Tsamp<sec>. The routine will end upon completion of computation of the wheel acceleration ΔVw(n).

On the other hand, at Step 540, there exists no continuous speed information necessary for computing wheel acceleration; therefore the wheel acceleration ΔVw(n) is set to zero, thus ending the routine.

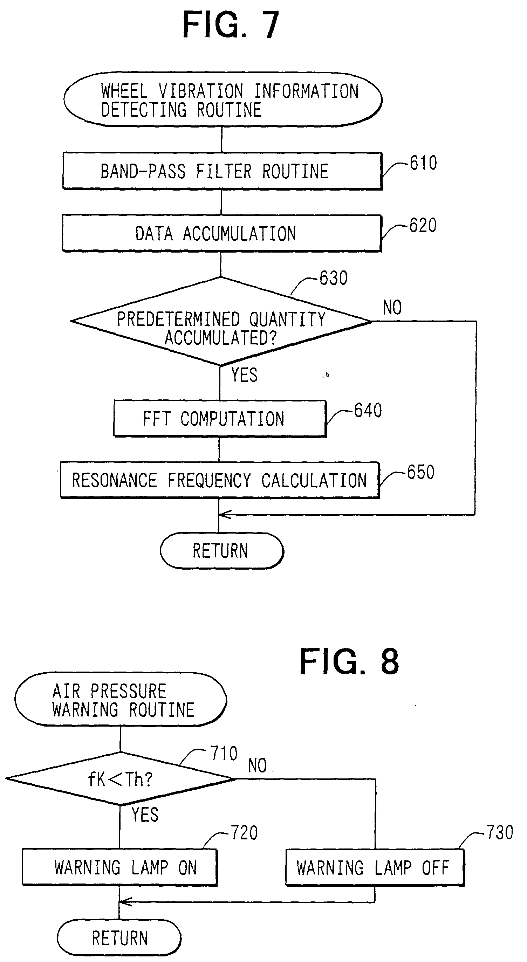

Next, by referring to Fig. 7, the details of the wheel vibration information detecting routine will be explained. The wheel vibration information detecting routine is performed by the use of the vibration information detecting means of the microcomputer 14b. The wheel vibration information includes tire air pressure information and road surface friction coefficient; however, the tire air pressure information is achieved by the use of the air pressure detecting means provided as the vibration information detecting means.

First at Step 610, a band-pass filter routine is executed to set the average pulse interval Δtave achieved at Step 420. To gain information on the tire air pressure mentioned above, for example about 20 to 60 Hz or 50 to 80 Hz frequency band is taken out, then proceeding to Step 620.

At Step 620, frequency band data that have been filtered at Step 610 are accumulated. Then, at Step 630, a decision is made to see whether or not a predetermined number (e.g., data for two seconds) of data have been accumulated. When the result of the decision is "YES", the routine proceeds to Step 640; reversely if the result is "NO", the routine goes back to the first step to repeat data accumulation.

At Step 640, frequency analysis is performed of the accumulated data by the Fourie (FFT) analysis routine. At Step 650, the resonance frequency is computed according to the result of frequency analysis achieved at Step 640. For example, a frequency at which the maximum gain is achieved from the result (result of FFT computation) obtained by the frequency analysis is extracted as a resonance frequency. To enhance noise immunity, the resonance frequency may be determined on the basis of the surface area and the center of gravity of the extracted band. The center of gravity is set at a frequency position which will be one half of the sum total of gain when a gain is computed at each frequency within an assumed frequency range.

The resonance frequency achieved as the information on tire air pressure has been explained above. When obtaining information on the road surface friction coefficient, about 2 to 20 Hz frequency band for example is taken out at Step 610, and then the band frequency is computed at Step 610 in place of Step 650, thereby obtaining a band frequency equivalent to information on the friction coefficient. In this case, it is possible to use, as the band frequency, a frequency the gain of which is lower by a specific ratio than the average gain of the extracted band. This routine is carried out by the friction coefficient detecting means provided as the vibration information detecting means.

Next the details of the air pressure warning routine will be explained by referring to Fig. 8. First, at Step 710, a comparison is made between the resonance frequency fK determined at Step 650 and a predetermined threshold value to check to see if the resonance frequency fK is less than the predetermined threshold value. If the result of decision is "YES", the routine proceeds to Step 720, to turn on a warning lamp (equivalent to a means for warning an abnormal tire air pressure) mounted in the vehicle compartment (not shown)to thereby warn the driver of an insufficient tire air pressure. Reversely, if the result is "NO", the routine goes to Step 730, where, because of a normal tire air pressure, the warning lamp is left off. Thus the driver will be able to know the condition of the tire air pressure.

In the present embodiment, as has been explained above, the integrated value Δtsum of the pulse interval Δt during one rotation of the signal rotor 12 is computed, and the integrated value Δtsum is updated when the next pulse interval Δt (m) is achieved after exceeding one rotation, and, further, the average pulse interval Δtave which is the average value of the integrated value Δtsum is determined. That is, the pulse information is extracted on the basis of time information required for one rotation of the tire (signal rotor 12).

After the one rotation of the tire, pulse information having the same uniformity as one rotation ago is regained. Therefore, it is possible to easily obtain pulse information with the uniformity cancelled, by replacing the pulse information obtained one rotation ago with the newly obtained pulse information.

Because there is no necessity to calculate the correction coefficient by every rotor tooth and therefore to compute the correction coefficient of all teeth. Furthermore, in the present embodiment, required is only to store the pulse interval Δt (m) corresponding to the number of teeth according to the assigned number of teeth of the signal rotor 12. Therefore it is unnecessary to store the correction coefficient of all teeth, thereby enabling to reduce microcomputer resource consumption.

Furthermore, in the present embodiment, after the integrated value Δtsum of the pulse intervals Δt for one rotation of tire (signal rotor 12) is achieved, rotation information with the uniformity cancelled is obtainable. The pulse information can reliably be obtained during a short period after the vehicle is started from a stop.

In the embodiment described above, the pulse interval Δt(m) per rotation of the tire (signal rotor 12) is integrated; when one rotation is exceeded, each of the pulse intervals Δt achieved thereafter is replaced with the pulse interval Δ t(k) one rotation ago. This processing, however, is not necessarily needed.

For example, with the predetermined number of teeth of the signal rotor 12 regarded as one cycle, when the predetermined number of teeth is exceeded, a pulse interval determined thereafter may be replaced with the pulse interval one cycle ago.

That is, when a method for forging every predetermined number of teeth, for example every three teeth, is adopted to process the rotor, the uniformity of the three teeth in one rotation is subject to continuous variation. Therefore, a desired accuracy of computation is achievable only when the variation of the three teeth is absorbed. Since storing one cycle of pulse interval is sufficient, microcomputer resource consumption can be further reduced.

Also, in one cycle of half a rotation or a fraction of a rotation, when a predetermined number of teeth corresponding to the one cycle is exceeded, the pulse interval achieved in the preceding one cycle may be replaced with the pulse interval achieved in the up-to- date one cycle.

When an influence by uniformity is considered on a frequency relative to rotational fluctuation, the fluctuation periodicity in one rotation is expressed as the primary, secondary, ... n-th frequency noises for the first, second, ... n-th rotational fluctuation. In this case, it is also conceivable that, when a driving speed and a necessary frequency band are taken into account in the control system, it will be unnecessary to eliminate the primary component of rotation. Therefore, it becomes possible to take out information on rotation with only information after the secondary component of rotation excluded by taking out an integrated value of pulse information per half a rotation or per a fraction of a rotation, thereby enabling the reduction of microcomputer resource consumption.

## Claims

1. A wheel rotation information detecting apparatus which detects information on rotation of a vehicle wheel by the use of a rotor provided with teeth (12) rotating together with the vehicle wheel, comprising:
a detecting means (13, 14a, 14b) for detecting edge information corresponding to the teeth of the rotor;
a storage means (14c) for storing the edge information per cycle which is equal to a predetermined number of the edge information in one period; and
a means (14b) for rewriting a previous one of the edge information per cycle that has been stored in the storage means to a most up-to-date one of edge information for newly storing in the storage means, when the most up-to-date one of edge information is detected.

2. A wheel rotation information detecting apparatus according to claim 1, wherein the storage means stores the edge information per a rotation of the rotor.

3. A wheel rotation information detecting apparatus according to claim 1 or 2, wherein the detecting means detects, as the edge information, pulse intervals At each corresponding to an interval between rising edges or falling edges of pulses occurring correspondingly to the teeth of the rotor.

4. A wheel rotation information detecting apparatus according to any one of claims 1 to 3, further comprising:
an integrated value computing means (14b, S110) for computing the integrated value Δtsum of the predetermined number of edge information stored in the storage means.

5. A wheel rotation information detecting apparatus according to claim 4, further comprising:
a vehicle wheel speed computing means (14b, S310) for computing a vehicle wheel speed on the basis of the integrated value.

6. A wheel rotation information detecting apparatus according to claim 5, further comprising:
a vehicle wheel acceleration computing means(14b, S320) for computing vehicle wheel acceleration on the basis of the vehicle wheel speed.

7. A wheel rotation information detecting apparatus according to any one of claims 1 to 6, further comprising:
a vibration information detecting means (14b, S330) for detecting information on vehicle vibration on the basis of the predetermined number of edge information stored in the storage means.

8. A wheel rotation information detecting apparatus according to claim 7, wherein the vibration information detecting means has a friction coefficient detecting means (14b, S610 to S650) for detecting road surface friction coefficient.

9. A wheel rotation information detecting apparatus according to claim 7, wherein the vibration information detecting means has an air pressure detecting means (14b, S340) for detecting a tire air pressure.

10. A wheel rotation information detecting apparatus according to claim 9, further comprising:
a warning means (14b, S710 to S730) for warning an abnormal tire air pressure on the basis of the tire air pressure detected by the air pressure detecting means.
